(19) **Europäisches Patentamt**
**European Patent Office**
**Office européen des brevets**

(11) **EP 4 447 384 A1**

(12) **EUROPEAN PATENT APPLICATION**
published in accordance with Art. 153(4) EPC

(43) Date of publication:
**16.10.2024 Bulletin 2024/42**

(51) International Patent Classification (IPC):
**H04L 9/40** *(2022.01)*

(21) Application number: **22903183.6**

(86) International application number:
**PCT/CN2022/133278**

(22) Date of filing: **21.11.2022**

(87) International publication number:
**WO 2023/103760 (15.06.2023 Gazette 2023/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.12.2021 CN 202111510132**

(71) Applicant: **Digital Currency Institute, The People's Bank of China Beijing 100071 (CN)**

(72) Inventors:
• **FENG, Linlin**
  **Beijing 100071 (CN)**
• **LV, Yi**
  **Beijing 100071 (CN)**
• **HUO, Yun**
  **Beijing 100071 (CN)**
• **LIU, Lei**
  **Beijing 100071 (CN)**

(74) Representative: **Casalonga Casalonga & Partners Bayerstraße 71/73 80335 München (DE)**

(54) **COMMUNICATION MONITORING METHOD, APPARATUS AND SYSTEM**

(57) The present application relates to the technical field of computers, and discloses a communication monitoring method, apparatus and system. One specific embodiment of the method includes: obtaining, in response to establishment of a communication connection between two communication nodes, traffic data related to the communication connection; extracting node feature information from the traffic data; evaluating a comprehensive score of the communication connection based on the node feature information and a preset evaluation strategy matched with the communication connection; and determining whether the comprehensive score meets a preset communication security condition matched with the communication connection: if yes, determining that the communication connection is secure; otherwise, determining that the communication connection is risky. The embodiment can effectively improve the accuracy of a monitoring result, thereby effectively improving the communication security.

Fig. 1

S101

In response to establishment of a communication connection between two communication nodes, traffic data related to the communication connection is obtained

S102

Node feature information is extracted from the traffic data

S103

A comprehensive score of the communication connection is evaluated based on the node feature information and a preset evaluation strategy matched with the communication connection

S104

It is determined whether the comprehensive score meets a preset communication security condition matched with the communication connection

Not

S106

It is determined that the communication connection is risky

yes

S105

It is determined that the communication connection is secure

Fig. 1

## Description

### Cross-Reference to Related Application

This application claims priority of Chinese Patent Application No. 202111510132.5, entitled "Communication Monitoring Method, Apparatus and System" filed on December 10, 2021, the disclosure of which is incorporated by reference herein in its entirety as part or all of the present application.

### Technical Field

The present disclosure relates to the field of computer technologies, in particular to a communication monitoring method, apparatus and system.

### Background

At present, the Transport Layer Security/Secure Socket Layer (TLS/SSL) encryption technology has been widely used in Internet communications. A TLS/SSL encrypted channel is mainly established for two communication parties to conduct confidential communication therebetween. Malicious attackers and computer viruses also use the TLS/SSL encryption technology to attack, destruct, and transmit data, posing security risks to TLS/SSL communication. Therefore, the TLS/SSL communication needs to be monitored in order to detect and prevent the risks of the TLS/SSL communication.

Currently, in a main method for monitoring TLS/SSL communication, a statistical or machine learning algorithm is used to count and learn node features (such as IP, certificate information, and domain name) and communication traffic features (such as packet size, frequency, and time) of two communication parties with encrypted traffic to form monitoring rules, and then detection rules are used to detect all traffic. The samples counted by the statistical or machine learning algorithm are limited. The limitation of existing communication monitoring makes it difficult to meet the diversity and variability requirements of TLS/SSL communication scenarios, resulting in low accuracy of monitoring results.

### Summary

In view of the foregoing, embodiments of the present disclosure provide a communication monitoring method, apparatus and system, which can effectively improve the accuracy of a monitoring result, thereby effectively improving the communication security.

To achieve the above objective, in a first aspect, an embodiment of the present disclosure provides a communication monitoring method, including:

> obtaining, in response to establishment of a communication connection between two communication nodes, traffic data related to the communication connection;

> extracting node feature information from the traffic data;

> evaluating a comprehensive score of the communication connection based on the node feature information and a preset evaluation strategy matched with the communication connection; and

> determining whether the comprehensive score meets a preset communication security condition matched with the communication connection: if yes, determining that the communication connection is secure; otherwise, determining that the communication connection is risky.

According to one or more embodiments of the present disclosure, the extracting node feature information from the traffic data includes:

> detecting a handshake protocol data packet in the traffic data; and

> extracting a source protocol address, a destination protocol address, a port, and certificate information from the handshake protocol data packet.

According to one or more embodiments of the present disclosure, the evaluating a comprehensive score of the communication connection includes:

> determining a certificate score, an address score, and a reputation score related to the communication connection based on the source protocol address, the destination protocol address, the port, and the certificate information; and

> calculating the comprehensive score of the communication connection by using the certificate score, the address score, the reputation score, and a first weight coefficient combination configured in the evaluation strategy.

According to one or more embodiments of the present disclosure, the determining a certificate score related to the communication connection includes:

> determining a structure of the certificate score configured in the evaluation strategy, where the structure of the certificate score includes a second weight coefficient combination and any one or more of a certificate legality dimension, a certificate validity dimension, a certificate popularity dimension, and a certificate blacklist dimension;

> calculating a corresponding dimension score for each dimension included in the structure of the certificate score; and

calculating the certificate score based on the dimension score corresponding to each dimension included in the structure of the certificate score and the second weight coefficient combination.

According to one or more embodiments of the present disclosure, the calculating a corresponding dimension score for each dimension included in the structure of the certificate score includes:

in a case where the structure of the certificate score includes the certificate legality dimension,

verifying legality of the certificate information by using a preset root certificate; and

calculating a certificate validity score based on a verification result and a certificate validity calculation strategy configured in the evaluation strategy.

According to one or more embodiments of the present disclosure, the calculating a corresponding dimension score for each dimension included in the structure of the certificate score includes:

in a case where the structure of the certificate score includes the certificate validity dimension,

determining whether certificate validity time included in the certificate information is valid; and

calculating a certificate validity duration score based on a determination result and a validity scoring strategy configured in the evaluation strategy.

According to one or more embodiments of the present disclosure, the calculating a corresponding dimension score for each dimension included in the structure of the certificate score includes:

in a case where the structure of the certificate score includes the certificate popularity dimension,

searching for the certificate information in stored historical data and counting a certificate frequency of the certificate information within a set period; and

calculating a certificate popularity score based on the counted certificate frequency and a popularity calculation strategy configured in the evaluation strategy.

According to one or more embodiments of the present disclosure, the calculating a corresponding dimension score for each dimension included in the structure of the certificate score includes:

in a case where the structure of the certificate score includes the certificate blacklist dimension,

searching for whether the certificate information exists in a set certificate blacklist; and

calculating a certificate blacklist score based on a search result and a certificate blacklist calculation strategy configured in the evaluation strategy.

According to one or more embodiments of the present disclosure, the determining an address score related to the communication connection includes:

determining a structure of the address score configured in the evaluation strategy, where the structure of the address score includes a third weight coefficient combination and any one or more of a link pair popularity dimension, a service popularity dimension, a destination protocol address popularity dimension, a source protocol address popularity dimension, and an address blacklist dimension;

calculating a corresponding dimension score for each dimension included in the structure of the address score; and

calculating the address score based on the dimension score corresponding to each dimension included in the structure of the address score and the third weight coefficient combination.

According to one or more embodiments of the present disclosure, the calculating a corresponding dimension score for each dimension included in the structure of the address score includes:

in a case where the structure of the address score includes a link pair popularity dimension,

searching for a link pair including the source protocol address, the destination protocol address, and the port in stored historical data, and counting a frequency of searching for the link pair within the set time period; and

calculating a link pair popularity score based on the frequency of searching for the link pair and a link pair popularity calculation strategy configured in the evaluation strategy.

According to one or more embodiments of the present disclosure, the calculating a corresponding dimension score for each dimension included in the structure of the address score includes:

in a case where the structure of the address score includes the service popularity dimension,

searching for a service combination including the destination protocol address and the port in stored historical data, and counting a frequency of searching for the service combination within the set time period; and

calculating a service popularity score based on the frequency of searching for the service combination and a service popularity calculation strategy configured in the evaluation strategy.

According to one or more embodiments of the present disclosure, the calculating a corresponding dimension score for each dimension included in the structure of the address score includes:

in a case where the structure of the address score includes the destination protocol address popularity dimension,

searching for the destination protocol address in the stored historical data, and counting a frequency of searching for the destination protocol address within the set time period; and

calculating a destination protocol address popularity score based on the frequency of searching for the destination protocol address and a destination protocol address popularity calculation strategy configured in the evaluation strategy.

According to one or more embodiments of the present disclosure, the calculating a corresponding dimension score for each dimension included in the structure of the address score includes:

in a case where the structure of the address score includes the source protocol address popularity dimension,

searching for the source protocol address in stored historical data, and counting a frequency of searching for the source protocol address within the set time period; and

calculating a source protocol address popularity score based on the frequency of searching for the source protocol address and a source protocol address popularity calculation strategy configured in the evaluation strategy.

According to one or more embodiments of the present disclosure, the calculating a corresponding dimension score for each dimension included in the structure of the address score includes:

in a case where the structure of the address score includes the address blacklist dimension,

searching for whether the source protocol address and/or the destination protocol address exist/exists in a set address blacklist; and

calculating an address blacklist score based on a search result and an address blacklist calculation strategy configured in the evaluation strategy.

According to one or more embodiments of the present disclosure, the determining a reputation score related to the communication connection includes:

determining a structure of the address reputation score configured in the evaluation strategy, where the structure of the reputation score includes a fourth weight coefficient combination and any one or more of a certificate level dimension, a certificate signing authority dimension, a certificate status dimension, a geographical location dimension, an address reputation dimension, and a time dimension; and

calculating a corresponding dimension score for each dimension included in the structure of the reputation score; and

calculating the reputation score based on the dimension score corresponding to each dimension included in the structure of the reputation score and the fourth weight coefficient combination.

According to one or more embodiments of the present disclosure, the calculating a corresponding dimension score for each dimension included in the structure of the reputation score includes:

in a case where the structure of the reputation score includes the certificate level dimension,

determining a certificate level and a certificate type corresponding to the certificate information; and

calculating a certificate level score based on the determined certificate level and certificate type and a level calculation strategy configured in the evaluation strategy.

According to one or more embodiments of the present disclosure, the calculating a corresponding dimension score for each dimension included in the structure of the reputation score includes:

in a case where the structure of the reputation score includes the certificate signing authority dimension,

determining a signing authority corresponding to the certificate information; and

calculating a signing authority score based on the determined signing authority and a signing authority calculation strategy configured in the evaluation strategy.

According to one or more embodiments of the present disclosure, the calculating a corresponding dimension score for each dimension included in the structure of the reputation score includes:

in a case where the structure of the reputation score includes the certificate signing authority dimension,

determining a revocation status of the certificate information; and

calculating a certificate status score based on the determined revocation status and a certificate status calculation strategy configured in the evaluation strategy.

According to one or more embodiments of the present disclosure, the calculating a corresponding dimension score for each dimension included in the structure of the reputation score includes:

in a case where the structure of the reputation score includes a certificate signing authority dimension,

determining a domain name reputation corresponding to the destination protocol address; and

calculating a domain name reputation score based on the determined domain name reputation and a domain name reputation calculation strategy configured in the evaluation strategy.

According to one or more embodiments of the present disclosure, the calculating a corresponding dimension score for each dimension included in the structure of the reputation score includes:

in a case where the structure of the reputation score includes the certificate signing authority dimension,

determining a domain name reputation corresponding to the destination protocol address; and

calculating a domain name reputation score based on the determined domain name reputation and a domain name reputation calculation strategy configured in the evaluation strategy.

According to one or more embodiments of the present disclosure, the calculating a corresponding dimension score for each dimension included in the structure of the reputation score includes:

in a case where the structure of the reputation score includes the geographical location dimension,

determining geographical locations/a geographical location of the source protocol address and/or the destination protocol address; and

calculating a geographical location score based on the geographical locations/the geographical location of the source protocol address and/or the destination protocol address and a geographical location calculation strategy configured in the evaluation strategy.

According to one or more embodiments of the present disclosure, the calculating a corresponding dimension score for each dimension included in the structure of the reputation score includes:

in a case where the structure of the reputation score includes the address reputation dimension,

determining reputation statuses/a reputation status of the source protocol address and/or the destination protocol address; and

calculating an address reputation score based on the reputation statuses/the reputation status of the source protocol address and/or the destination protocol address and an address reputation calculation strategy configured in the evaluation strategy.

According to one or more embodiments of the present disclosure, the calculating a corresponding dimension score for each dimension included in the structure of the reputation score includes:

in a case where the structure of the reputation score includes the time dimension,

determining domain name binding time of the destination protocol address; and

calculating the domain name binding time score based on the domain name binding time of the destination protocol address and a domain name binding calculation strategy configured in the evaluation strategy.

According to one or more embodiments of the present disclosure, the communication monitoring method further includes:

providing a plurality of configuration items to a client, such that the client configures configuration information included in the evaluation strategy for the communication connection based on the configuration items;

receiving configuration information corresponding to the plurality of the configuration items sent by the client; and

combining configuration information corresponding to the plurality of the configuration items into the evaluation strategy matched with the communication connection.

According to one or more embodiments of the present disclosure, the configuration information includes:

any one or more pieces of the following information:

the first weight coefficient combination, a plurality of certificate dimensions and the second weight coefficient combination included in a structure of the certificate score, a plurality of address dimensions and the third weight coefficient combination included in a structure of the address score, and a plurality of reputation dimensions and the fourth weight coefficient combination included in a structure of the address reputation score.

According to one or more embodiments of the present disclosure, the communication security condition matched with the communication connection includes:

the comprehensive score is not less than a preconfigured communication security threshold; or,

the comprehensive score is not more than the preconfigured communication security threshold.

According to one or more embodiments of the present disclosure, after the determining that the communication connection is risky, the method further includes:

interrupting the communication connection; and/or,

issuing a risk warning for the communication connection.

In a second aspect, an embodiment of the present disclosure provides a communication monitoring apparatus, including:

an obtaining module configured to obtain, in response to establishment of a communication connection between two communication nodes, traffic data related to the communication connection;

an evaluation module configured to: extract node feature information from the traffic data; and evaluate a comprehensive score of the communication connection based on the node feature information and a preset evaluation strategy matched with the communication connection; and

a risk management module configured to determine whether the comprehensive score meets a preset communication security condition matched with the communication connection: if yes, determine that the communication connection is secure; otherwise, determine that the communication connection is risky.

In a third aspect, an embodiment of the present disclosure provides a communication monitoring system, including a plurality of communication nodes and the communication monitoring apparatus provided by the above embodiment in the second aspect.

Optionally, the communication monitoring system further includes a configuration client, wherein

the configuration client is configured to receive user configured configuration information configured by a user for an evaluation strategy and a communication security condition and to send the configuration information for the evaluation strategy and the communication security condition to the communication monitoring apparatus; and

the communication monitoring apparatus is configured to determine the evaluation strategy and the communication security condition for a communication connection based on the configuration information.

In a fourth aspect, an embodiment of the present disclosure provides an electronic device.

The electronic device includes: one or more processors; and a memory configured to store one or more programs, wherein when the one or more programs are executed by the one or more processors, the one or more processors are caused to implement the communication monitoring method provided by the embodiment of the present disclosure.

In a fifth aspect, an embodiment of the present disclosure provides a computer-readable medium.

The computer-readable medium has a computer program stored thereon, where the program, when executed by a processor, implementing the communication monitoring method provided by the embodiment of the present disclosure.

One embodiment in the above disclosure has the following advantages or beneficial effects: because the comprehensive score for evaluating the communication connection is based on the node feature information extracted from the traffic data and the evaluation strategy matched with the communication connection, the comprehensive score can more accurately reflect a status of the communication connection. Therefore, the determination whether the communication connection is secure or risky based on the comprehensive score can effectively improve the accuracy of a monitoring result, thereby effectively improving the communication security.

The further effects of the above non-conventional optional method will be described below in conjunction with specific embodiments.

**Brief Description of the Drawings**

The accompanying drawings are used to better understand the present disclosure and do not constitute any improper limitation to the present disclosure. In the drawings:

Fig. 1 is a schematic diagram of the main steps of a communication monitoring method according to one embodiment of the present disclosure;

Fig. 2 is a schematic diagram of the main steps of evaluating a comprehensive score of a communication connection according to one embodiment of the present disclosure;

Fig. 3 is a schematic diagram of the main steps of calculating a certificate score according to one embodiment of the present disclosure;

Fig. 4 is a schematic diagram of the main steps of calculating an address score according to one embodiment of the present disclosure;

Fig. 5 is a schematic diagram of the main steps of calculating a reputation score according to one embodiment of the present disclosure;

Fig. 6 is a schematic diagram of the main steps of configuring an evaluation strategy according to one embodiment of the present disclosure;

Fig. 7 is a schematic diagram of the main modules of a communication monitoring apparatus according to one embodiment of the present disclosure;

Fig. 8 is a schematic diagram of the main components of a communication monitoring system according to one embodiment of the present disclosure;

Fig. 9 is a schematic diagram of the main processes of monitoring communication between an intranet terminal and an extranet server according to one embodiment of the present disclosure;

Fig. 10 is a schematic diagram of the main processes of monitoring transfer communication according to one embodiment of the present disclosure;

Fig. 11 is a diagram of an exemplary system architecture to which an embodiment of the present disclosure may be applied; and

Fig. 12 is a schematic structural diagram of a computer system suitable for implementing a terminal device/server in an embodiment of the present disclosure.

**Detailed Description of the Embodiments**

Exemplary embodiments of the present disclosure are described below in conjunction with the accompanying drawings, wherein various details of the embodiments of the present disclosure are included to facilitate understanding, and should only be considered as exemplary. Therefore, those of ordinary skill in the art should be aware that various changes and modifications may be made to the embodiments described herein, without departing from the scope and spirit of the present disclosure. Similarly, for the sake of clarity and conciseness, the description of well-known functions and structures is omitted in the following description.

At present, application layer protocols (such as http, ftp, and smtp) commonly used for transmitting information between two applications generally have network security issues. For example, the http protocol uses plaintext information during transmission, and once a transmission message is intercepted, the contents of the transmission will be leaked; and if the message is tampered during transmission, it cannot be easily found. In addition, the http protocol cannot guarantee the reliability of identities of two terminals for message exchange. In order to solve such problems, a TLS/SSL protocol is mainly added between an application layer and a transport layer. A TLS is a protocol built on a Transmission Control Protocol (TCP) of the transport layer and serves the application layer; and an SSL implements a function of encrypting a message of the application layer and then transmitting the message by the TCP.

In other words, during the transmission of information between a terminal or a client and a server, a dedicated TLS/SSL encrypted channel may be established to conduct confidential communication, and a third party cannot crack the encrypted channel and obtain communication content. For example, during the process of obtaining email information from an email server, a terminal encrypts an email, and the encrypted email will be sent from the email server to the terminal through an encrypted channel established between the terminal and the email server. For another example, a user makes an online payment through a terminal, online payment information such as user information and payment amount is encrypted, and an encrypted channel is established between the terminal and a payment server to transmit the encrypted online payment information.

Generally speaking, secure communication between two communication parties (a terminal and a server) is based on the legality of an encrypted channel established therebetween. For the legality of the encrypted channel, different communication legality standards may be set according to different requirements of users. For example, for an enterprise, an encrypted channel is established between an intranet terminal and an intranet server, which is defined as legal; and an encrypted channel is established between an intranet terminal and an extranet server, which is defined as illegal. Therefore, the data security is ensured based on the detection of illegal encrypted channels.

At present, a statistical or machine learning algorithm is used to count and learn node features (such as IP, certificate information, and domain name) and communication traffic features (such as packet size, frequency, and time) of two communication parties with encrypted traffic to form monitoring rules, and then detection rules are used to detect all traffic. While the detection rules are applicable to most of detections, an existing detection method for detection of communication in a certain scenario may have problems of missing report, many false reports, etc. due to the diversity and variability of TLS/SSL communication scenarios. In addition, because the existing detection method requires the collection of a large number of sample features and involves many features to result in high resource consumption during detection, illegal TLS/SSL encrypted channels cannot be detected efficiently and accurately.

Based on the problems in existing communication monitoring, embodiments of the present disclosure provide a communication monitoring method, apparatus and system. In the communication monitoring, apparatus and system, two communication nodes involved can communicate between a terminal and a server or between servers.

In the two communication nodes, one is a source terminal, and the other is a destination terminal. In the two communication nodes, the source terminal is generally one communication node actively initiating a connection request; and the destination terminal is generally the other communication node receiving the connection request. The communication node corresponding to the source terminal may be a terminal or a server. Correspondingly, the communication node corresponding to the destination terminal may be a server or a terminal. For example, if an email server sends an email to a terminal through an encrypted channel, the email server is the source terminal, and the terminal receiving the email is the destination terminal. For another example, if a terminal sends payment information to a payment server, the terminal is the source terminal and the payment server is the destination terminal. Correspondingly, a source protocol address is a protocol address of the source terminal, and a destination protocol address is a protocol address corresponding to the destination terminal. Certificate information generally refers to the relevant information of a certificate issued by a CA certification authority or a CA authority for a server.

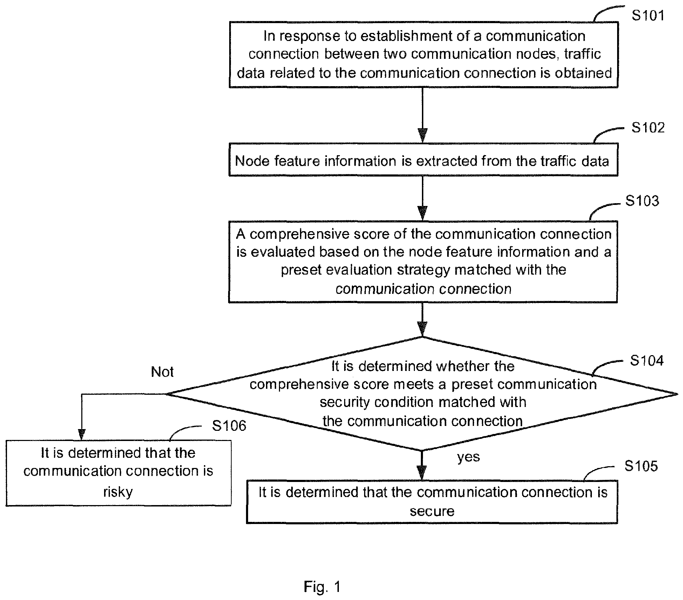

Fig. 1 is a schematic diagram of the main steps of a communication monitoring method according to one embodiment of the present disclosure. As shown in Fig. 1, the communication monitoring method according to one embodiment of the present disclosure mainly includes steps below.

In step S101, in response to establishment of a communication connection between two communication nodes, traffic data related to the communication connection is obtained.

Generally speaking, if two communication nodes communicate through a TLS/SSL protocol, the two communication nodes first need to establish a TLS/SSL encrypted channel through the TLS/SSL handshake protocol and then transmit traffic data through the TLS/SSL encrypted channel.

In this step, the traffic data sent from one communication node to the other communication node may be monitored in a mirroring or serial line mode, and when the handshake traffic data is monitored, it is determined that the communication connection is established between the two communication nodes.

Obtaining traffic data related to the communication connection specifically includes: obtaining traffic data in the TLS/SSL encrypted channel in a mirroring or serial line mode, or obtaining a first packet, namely, a "ClientHello" packet in the TLS/SSL handshake protocol.

In this embodiment, both of two communication nodes in communication connection may be servers; or one communication node is a terminal or a client, and the other communication node is a server. Generally speaking, the communication monitoring method provided by this embodiment of the present disclosure is to monitor traffic data of one of the two monitoring nodes.

Establishing a communication connection between two communication nodes generally refers to establishing a communication channel between a communication node monitored by the communication monitoring method and any one of the other communication nodes.

In step S102, node feature information is extracted from the traffic data.

A specific embodiment of this step may include: a handshake protocol data packet in the traffic data is detected; and a source protocol address, a destination protocol address, a port, and certificate information are extracted from the handshake protocol data packet. The handshake protocol data packet may be the first packet, namely, the "ClientHello" packet in the TLS/SSL handshake protocol and the "Certifacate" packet information in the TLS/SSL handshake protocol. The node feature information may include the source protocol address, the destination protocol address, the port, the certificate information, and current time at which the information is extracted. The source protocol address, the destination protocol address, and the port may be extracted from the first packet, namely, the "ClientHello" packet in the TLS/SSL handshake protocol, and the certificate information may be extracted from the "Certifacate" information in the TLS/SSL handshake protocol.

The source protocol address refers to an IP address of the communication node initiating the communication connection in the two communication nodes in the communication connection. The destination protocol address refers to an IP address of the communication node receiving the communication connection in the two communication nodes in the communication connection. The port refers to a port number on which the communication connection depends. In other words, the node feature information is TCP connection quadruple information (IP addresses and port numbers of the two communication nodes) of the two communication nodes.

In addition, the node feature information may further include a node's geographical location, node reputation information, etc.

The node feature information extracted in this step may be extracted based on node feature information required for an evaluation strategy matched with the communication connection or based on user requirements and configurations.

In step S103, a comprehensive score of the communication connection is evaluated based on the node feature information and a preset evaluation strategy matched with the communication connection.

The evaluation strategy matched with the communication connection may be an evaluation strategy specifically configured for any one of the communication nodes in the communication connection, an evaluation strategy configured for a network where any one of the communication nodes in the communication connection is located, or an initial evaluation strategy set by a communication monitoring apparatus or system. Therefore, the evaluation strategy has good configuration flexibility and can better meet the requirements of the communication connection.

Because the node feature information includes the source protocol address, the destination protocol address, the port, the certificate information, etc., the node feature information can truly reflect the features of the communication nodes. Therefore, through the node feature information and the evaluation strategy matched with the communication connection, it can be ensured that an evaluation result can truly and accurately reflect a status of the communication connection.

In addition, because the evaluation process mainly involves the node feature information, without an overall analysis of the traffic data, the consumption of computing resources can be greatly reduced.

In step S104, it is determined whether the comprehensive score meets a preset communication security condition matched with the communication connection: if yes, step S105 is performed; otherwise, step S106 is performed.

The communication security condition in this step may be as follows: the comprehensive score is not less than a preconfigured communication security threshold; or, the comprehensive score is not more than the preconfigured communication security threshold. The communication security threshold may be correspondingly configured based on characteristics of the communication connection itself or characteristics of a network where the communication connection is located, such that the communication security condition can better meet the requirements of different communication connections, thereby further improving the accuracy of a communication monitoring result and the communication security.

In step S105, it is determined that the communication connection is secure, and the current process ends.

In step S106, it is determined that the communication connection is risky.

If it is determined that the communication connection is risky, the communication connection may be further interrupted; and/or, a risk warning is issued for the communication connection. The risk warning may be notified to a communication security administrator by an email, a short message, and other means.

According to the embodiment shown in Fig. 1, because the comprehensive score for evaluating the communication connection is based on the node feature information extracted from the traffic data and the evaluation strategy matched with the communication connection, the comprehensive score can more accurately reflect the status of the communication connection. Therefore, the determination whether the communication connection is secure or risky based on the comprehensive score can effectively improve the accuracy of the monitoring result, thereby effectively improving the communication security.

In summary, it can be seen that the solution provided by this embodiment of the present disclosure comprehensively evaluates the TLS/SSL encrypted channel by using the TLS/SSL encrypted channel as a unit. Moreover, each TLS/SSL encrypted channel only analyzes a link establishment stage, without full traffic rule learning and detection, such that illegal TLS/SSL encrypted channels can be efficiently detected. It can be applied to a scenario where a high-security area actively establishes a link to the outside to transmit data. For example, an intranet of an enterprise with high security requirements, such as a bank and a securities company, actively transmits data to an extranet, and a corresponding evaluation strategy is set for a communication connection based on characteristics of the communication connection to detect illegal encrypted channels more effectively.

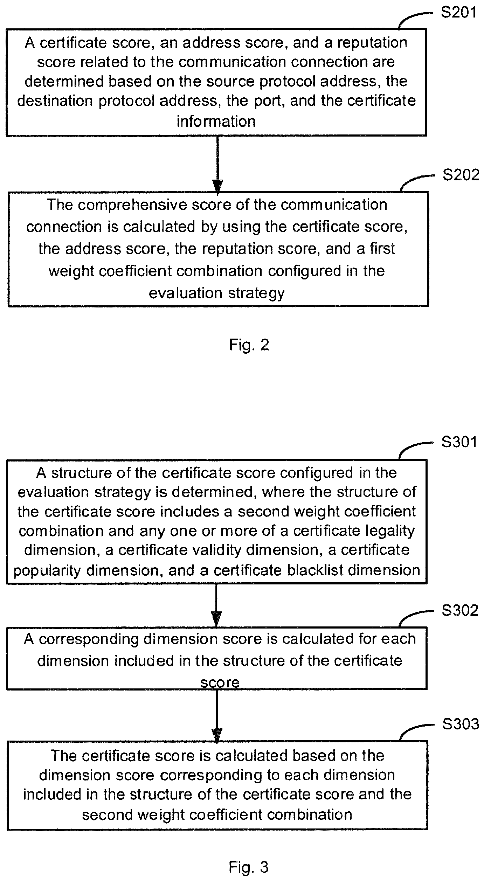

In this embodiment of the present disclosure, as shown in Fig. 2, a specific embodiment of the above step S103 may include the following steps:

step S201: a certificate score, an address score, and a reputation score related to the communication connection are determined based on the source protocol address, the destination protocol address, the port, and the certificate information; and

step S202: the comprehensive score of the communication connection is calculated by using the certificate score, the address score, the reputation score, and a first weight coefficient combination configured in the evaluation strategy.

The certificate score, the address score, and the reputation score can comprehensively evaluate the security of the communication connection. The first weight coefficient combination refers to a combination of weight coefficients corresponding to the certificate score, the address score, and the reputation score in the process of calculating the comprehensive score, wherein the weight coefficients may be correspondingly configured according to actual situations, or initial values of various weights in the first weight coefficient combination may be selected.

In the step S202, the comprehensive score may be calculated by the following calculation formula (1):

$$\mathrm{F} = \sum_{i=1}^{3}(\alpha_i \times f_i) \qquad (1)$$

where F represents the comprehensive score; i represents a score type (which is one of the certificate score, the address score, and the reputation score; for example, i = 1 represents that the score type is the certificate score, i = 2 represents that the score type is the address score, and i = 3 represents that the score type is the reputation score); $\alpha i$ represents a weight coefficient corresponding to the score type i in the first weight coefficient combination; and fi represents a specific score corresponding to the score type i.

The weight coefficient corresponding to the score type i may be set to any value according to the requirements, such as -1, -0.2, 0, 0.5, 1, and 2.

The weight coefficients of the score types (the certificate score, the address score, and the reputation score) are all not more than 0 or all not less than 0, and are not all 0. In addition, generally speaking, in the case where the weight coefficients of the score types (the certificate score, the address score, and the reputation score) are all not more than 0, the lower the comprehensive score is, the higher the security is, and the higher the comprehensive score is, the lower the security is. On the contrary, in the case where the weight coefficients of the score types (the certificate score, the address score, and the reputation score) are all not less than 0, the higher the comprehensive score is, the higher the security is, and the lower the comprehensive score is, the lower the security is.

Specifically, as shown in Fig. 3, a specific embodiment of the determining a certificate score related to the communication connection may include steps below.

In step S301, a structure of the certificate score configured in the evaluation strategy is determined, where the structure of the certificate score includes a second weight coefficient combination and any one or more of a certificate legality dimension, a certificate validity dimension, a certificate popularity dimension, and a certificate blacklist dimension.

The structure of the certificate score configured in the evaluation strategy may be correspondingly configured by the user based on the communication node or the network where the communication node is located. For example, the communication monitoring apparatus provides the user with the certificate legality dimension, the certificate validity dimension, the certificate popularity dimension, and the certificate blacklist dimension, such that the user can select the dimension included in the structure of the certificate score that is configured by the user from these dimensions. Correspondingly, the second weight coefficient combination is a combination of weight coefficients corresponding to the configured dimensions. For example, a structure of a certificate score configured in an evaluation strategy for an intranet A includes a certificate legality dimension, a certificate validity dimension, and a certificate popularity dimension. Correspondingly, the second weight coefficient combination includes a weight coefficient corresponding to the certificate legality dimension, a weight coefficient corresponding to the certificate validity dimension, and a weight coefficient corresponding to the certificate popularity dimension. A structure of a certificate score configured in an evaluation strategy corresponding to each communication node in the intranet A is the structure of the certificate score configured in the evaluation strategy for the intranet A. For another example, a structure of a certificate score configured in an evaluation strategy for an intranet B includes a certificate legality dimension, a certificate validity dimension, a certificate popularity dimension, and a certificate blacklist dimension. Correspondingly, the second weight coefficient combination includes a weight coefficient corresponding to the certificate legality dimension, a weight coefficient corresponding to the certificate validity dimension, a weight coefficient corresponding to the certificate popularity dimension, and a weight coefficient corresponding to the certificate blacklist dimension. A structure of a certificate score configured in an evaluation strategy corresponding to each communication node in the intranet B is the structure of the certificate score configured in the evaluation strategy for the intranet B.

In step S302, a corresponding dimension score is calculated for each dimension included in the structure of the certificate score.

A specific embodiment of this step may include: in the case where the structure of the certificate score includes the certificate legality dimension, the legality of the certificate information is verified by using a preset root certificate; and a certificate validity score is calculated based on a verification result and a certificate validity calculation strategy configured in the evaluation strategy.

Generally speaking, the certificate is authorized by a root certificate or an intermediate certificate authorized by the root certificate. Therefore, the accuracy of legality verification can be ensured by verifying the legality of the certificate information based on the root certificate. The verification process may be implemented using an existing verification method.

The certificate legality calculation strategy may be correspondingly set according to user requirements. The verification result may be legal or illegal. For example, the certificate validity calculation strategy is as follows: if the verification result indicates that the certificate information is legal, the certificate validity score a is assigned to the certificate information; and if the verification result indicates that the certificate information is illegal, the certificate validity score 0 is assigned to the certificate information. The certificate validity calculation strategy may further be as follows: for the verification result indicating that the certificate information is legal, the certificate validity score assigned to the certificate information is calculated using a set calculation formula S1 containing parameters corresponding to the verification result indicating that the certificate information is legal; and for the verification result indicating that the certificate information is illegal, the certificate validity score assigned to the certificate information is calculated using a set calculation formula S2 containing parameters corresponding to the verification result indicating that the certificate information is illegal. The calculation formulas S1 and S2 may be set according to user requirements.

In the case where the structure of the certificate score includes the certificate validity dimension, it is determined whether the certificate validity time included in the certificate information is valid; and a certificate validity duration score is calculated based on a determination result and a validity scoring strategy configured in the evaluation strategy. The validity scoring strategy may be as follows: if the certificate validity time is valid, the certificate validity score b1 is assigned; and if the certificate validity time is invalid, the certificate validity duration score 0 is assigned. The validity scoring strategy may further be as follows: if the certificate validity time is valid, the certificate validity duration score b2 is assigned; if the certificate validity time is invalid and the invalid time is less than c1, the certificate validity duration score b3 is assigned; and if the certificate validity time is invalid and the invalid time is more than or equal to c1, the certificate validity duration score b4 is assigned. The validity scoring strategy configured in the evaluation strategy can further be subjected to other configuration according to user requirements.

In the case where the structure of the certificate score includes the certificate popularity dimension, stored historical data is searched for the certificate information and a certificate frequency of the certificate information within a set period is counted; and a certificate popularity score is calculated based on the counted certificate frequency and a popularity calculation strategy configured in the evaluation strategy.

The historical data refers to relevant information of the traffic data monitored by the communication monitoring apparatus, such as an IP of a communication node, a port number, certificate information, and collection time of the traffic data. the set time period; may be correspondingly set to 24 h, 48 h, etc. according to the requirements. The certificate frequency refers to the number of times a certificate occurs within a set period.

The popularity calculation strategy may be as follows: the certificate frequency is converted into the certificate popularity score (the certificate frequency is equal to the certificate popularity score). The popularity calculation strategy may further be as follows: if the certificate frequency is within a certificate frequency range of [O1, O2], the corresponding certificate popularity score is P1; if the certificate frequency is within a certificate frequency range of (O2, O3], the corresponding certificate popularity score is P2; and if the certificate frequency is within a certificate frequency range of (O3, O4], the corresponding certificate popularity score is P3, where O1 < O2 < O3 < O4. The popularity calculation strategy configured in the evaluation strategy can further be subjected to other configuration according to user requirements.

In the case where the structure of the certificate score includes the certificate blacklist dimension, a set certificate blacklist is searched for whether the certificate information exists; and a certificate blacklist score is calculated based on a search result and a certificate blacklist calculation strategy configured in the evaluation strategy. The certificate blacklist calculation strategy configured in the evaluation strategy may be as follows: if the search result indicates that the certificate information is not in a blacklist, the certificate blacklist score H is assigned; and if the search result indicates that the certificate information is in the blacklist, the certificate blacklist score 0 is assigned.

In step S303, the certificate score is calculated based on the dimension score corresponding to each dimension included in the structure of the certificate score and the second weight coefficient combination.

In the step S303, the certificate score may be calculated by the following calculation formula (2):

$$f_1 = \sum_{j=1}^{n}(\beta_j \times z_j) \qquad (2)$$

where f1 represents the certificate score; j represents a jth dimension included in the configured structure of the certificate score; βj represents a weight coefficient corresponding to the jth dimension in the second weight coefficient combination; zj represents a specific score of the jth dimension; and n represents the number of dimensions included in the configured structure of the certificate score.

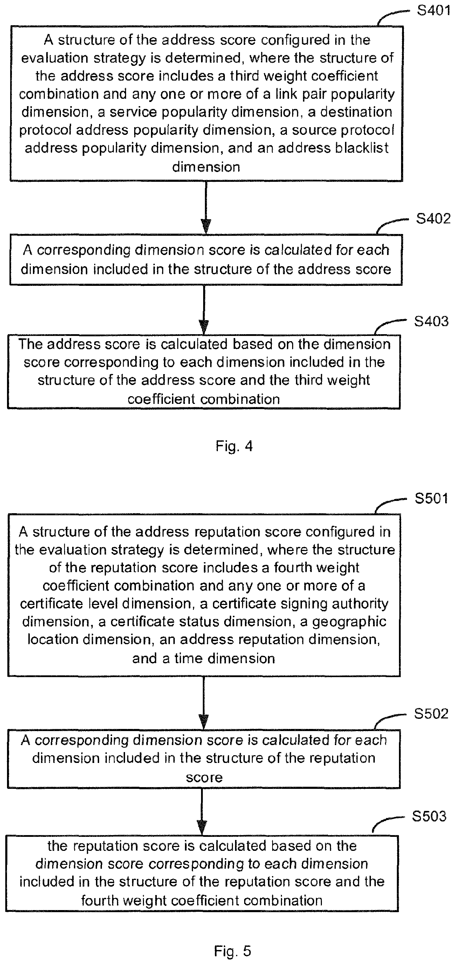

Specifically, as shown in Fig. 4, a specific embodiment of the determining an address score related to the communication connection may include steps below.

In step S401, a structure of the address score configured in the evaluation strategy is determined, where the structure of the address score includes a third weight coefficient combination and any one or more of a link pair popularity dimension, a service popularity dimension, a destination protocol address popularity dimension, a source protocol address popularity dimension, and an address blacklist dimension.

In step S402, a corresponding dimension score is calculated for each dimension included in the structure of the address score.

A specific embodiment of the step S402 may include:

in the case where the structure of the address score includes the link pair popularity dimension, stored historical data is searched for a link pair including the source protocol address, the destination protocol address, and the port (a port number), and a frequency of searching for the link pair within the set time period; is counted; and a link pair popularity score is calculated based on the frequency of searching for the link pair and a link pair popularity calculation strategy configured in the evaluation strategy. The popularity calculation strategy may be correspondingly set according to user or network requirements. For example, the link pair popularity calculation strategy may be as follows: the frequency of the link pair is directly used as the link pair popularity score. The link pair popularity calculation strategy may further be as follows: if the frequency of the link pair is within a range of [Y1, Y2], the link pair popularity score G1 is assigned; and if the frequency of the link pair is within a range of (Y2, Y3), the link pair popularity score G2 is assigned, where Y1 < Y2 < Y3. It may be generally set that the higher the frequency of the link pair is, the higher the link pair popularity score is.

It is worth noting that if the frequency of the link pair is within the range of [Y1, Y2], the link pair popularity score G1 is assigned; and if the frequency of the link pair is within the range of (Y2, Y3), the link pair popularity score G2 is assigned, which is only an example, In the case where the link pair popularity calculation strategy configures the link pair popularity score based on ranges of the frequency of the link pair, the number of the ranges may be set according to the actual situations and is not only limited to 2.

In the case where the structure of the address score includes the service popularity dimension, the stored historical data is searched for a service combination including the destination protocol address and the port, and a frequency of searching for the service combination within the set time period; is counted; and a service popularity score is calculated based on the frequency of searching for the service combination and a service popularity calculation strategy configured in the evaluation strategy. The service popularity calculation strategy may be correspondingly set according to the user or network requirements. For example, the service popularity calculation strategy may be as follows: the frequency of the service combination is directly used as the service popularity score. The service popularity calculation strategy may further be as follows: if the frequency of the service combination is within a range of [R1, R2], the service popularity score T1 is assigned; and if the frequency of the service combination is within a range of (R2, R3), the service popularity score T2 is assigned, where R1 < R2 < R3. It may be generally set that the higher the frequency of the service combination is, the higher the service popularity score is.

It is worth noting that if the frequency of the service combination is within the range of [R1, R2], the service popularity score T1 is assigned; and if the frequency of the service combination is within the range of (R2, R3), the service popularity score T2 is assigned, which is only an example. In the case where the service popularity calculation strategy configures the service popularity score based on ranges of the frequency of the service combination, the number of the ranges may be set according to the actual situations and is not only limited to 2.

In the case where the structure of the address score includes the destination protocol address popularity dimension, the stored historical data is searched for the destination protocol address, and a frequency of searching for the destination protocol address within the set time period; is counted; and a destination protocol address popularity score is calculated based on the frequency of searching for the destination protocol address and a destination protocol address popularity calculation strategy configured in the evaluation strategy. The destination protocol address popularity calculation strategy may be correspondingly set according to the user or network requirements. For example, the configuration of the destination protocol address popularity calculation strategy may be similar to that of the above service popularity calculation strategy and link pair popularity calculation strategy, and will not be repeated herein.

In the case where the structure of the address score includes the source protocol address popularity dimension, the stored historical data is searched for the source protocol address, and a frequency of searching for the source protocol address within the set time period; is counted; and a source protocol address popularity score is calculated based on the frequency of searching for the source protocol address and a source protocol address popularity calculation strategy configured in the evaluation strategy. The source protocol address popularity calculation strategy may be correspondingly set according to the user or network requirements. For example, the configuration of the source protocol address popularity calculation strategy may be similar to that of the above service popularity calculation strategy and link pair popularity calculation strategy, and will not be repeated herein.

In the case where the structure of the address score includes the address blacklist dimension, a set address blacklist is searched for whether the source protocol address and/or the destination protocol address exist/exists; and an address blacklist score is calculated based on a search result and an address blacklist calculation strategy configured in the evaluation strategy. The address blacklist calculation strategy may be as follows: if the destination protocol address is included in the blacklist, the address blacklist score is 0; and if the destination protocol address is not included in the blacklist, the address blacklist score is K. In addition, the address blacklist calculation strategy may further be correspondingly configured according to actual requirements.

In step S403, the address score is calculated based on the dimension score corresponding to each dimension included in the structure of the address score and the third weight coefficient combination.

The calculated address score may also be obtained by accumulating products of scores of all dimensions and weight coefficients of the dimensions included in the third weight coefficient combination.

Specifically, as shown in Fig. 5, a specific embodiment of the determining a reputation score related to the communication connection may include steps below.

In step S501, a structure of the address reputation score configured in the evaluation strategy is determined, where the structure of the reputation score includes a fourth weight coefficient combination and any one or more of a certificate level dimension, a certificate signing authority dimension, a certificate status dimension, a geographical location dimension, an address reputation dimension, and a time dimension.

In step S502, a corresponding dimension score is calculated for each dimension included in the structure of the reputation score.

In the case where the structure of the reputation score includes the certificate level dimension, a certificate level and a certificate type corresponding to the certificate information are determined; and a certificate level score is calculated based on the determined certificate level and certificate type and a level calculation strategy configured in the evaluation strategy. The certificate level includes EV, OV, DV, etc. The certificate type may include a single-domain-name certificate, a multi-domain-name certificate, and an extensive-domain-name certificate. The level calculation strategy may be as follows: corresponding scores are assigned to different certificate levels and different certificate types, and the scores corresponding to the certificate level and the certificate type are summed to obtain the certificate level score. In addition, the level calculation strategy may further be correspondingly set according to the actual requirements.

In the case where the structure of the reputation score includes the certificate signing authority dimension, a signing authority corresponding to the certificate information is determined; and a signing authority score is calculated based on the determined signing authority and a signing authority calculation strategy configured in the evaluation strategy. For example, the signing authority calculation strategy may be as follows: if the signing authority belongs to a trusted signing authority configured by the user, it is determined that the signing authority score is L; and if the signing authority does not belong to the trusted signing authority configured by the user, it is determined that the signing authority score is 0. In addition, the signing authority calculation strategy may further be correspondingly set according to the actual requirements.

In the case where the structure of the reputation score includes the certificate signing authority dimension, a revocation status of the certificate information is determined; and a certificate status score is calculated based on the determined revocation status and a certificate status calculation strategy configured in the evaluation strategy. For example, the certificate status calculation strategy may be as follows: if the certificate information is not revoked, it is determined that the certificate status score is Q; and if the certificate information is revoked, it is determined that the certificate status score is 0. In addition, the certificate status calculation strategy may further be correspondingly set according to the actual requirements.

In the case where the structure of the reputation score includes the certificate signing authority dimension, a domain name reputation corresponding to the destination protocol address is determined; and a domain name reputation score is calculated based on the determined domain name reputation and a domain name reputation calculation strategy configured in the evaluation strategy. The domain name reputation may be derived from reputations of domain names evaluated by other systems, or may be a result of reputation evaluation of a domain name by the communication monitoring apparatus itself.

In the case where the structure of the reputation score includes the geographical location dimension, geographical locations/a geographical location of the source protocol address and/or the destination protocol address are/is determined; and a geographical location score is calculated based on the geographical locations/the geographical location of the source protocol address and/or the destination protocol address and a geographical location calculation strategy configured in the evaluation strategy. The geographical location calculation strategy may be as follows: if the geographical locations/the geographical location of the source protocol address and/or the destination protocol address are/is not geographical locations/a geographical location that occur/occurs frequently, a low value is assigned to the geographical location score; and if the geographical locations/the geographical location of the source protocol address and/or the destination protocol address are/is the geographical locations/the geographical location that occur/occurs frequently, a high value is assigned to the geographical location score.

In the case where the structure of the reputation score includes the address reputation dimension, reputation statuses/a reputation status of the source protocol address and/or the destination protocol address are/is determined; and an address reputation score is calculated based on the reputation statuses/the reputation status of the source protocol address and/or the destination protocol address and an address reputation calculation strategy configured in the evaluation strategy. The reputation statuses/the reputation status of the source protocol address and/or the destination protocol address may be obtained from an external reputation evaluation system, or may be evaluated based on reputation evaluation rules set by the communication monitoring apparatus. The reputation evaluation process may be implemented by an existing reputation evaluation technology.

In the case where the structure of the reputation score includes the time dimension, domain name binding time of the destination protocol address is determined; and a domain name binding time score is calculated based on the domain name binding time of the destination protocol address and a domain name binding calculation strategy configured in the evaluation strategy. For example, the domain name binding calculation strategy is as follows: the longer the domain name binding time is, the higher the domain name binding time score is.

In step S503, the reputation score is calculated based on the dimension score corresponding to each dimension included in the structure of the reputation score and the fourth weight coefficient combination.

The calculated reputation score may also be obtained by accumulating products of scores of all dimensions included in the structure of the reputation score and weight coefficients of the dimensions included in the fourth weight coefficient combination.

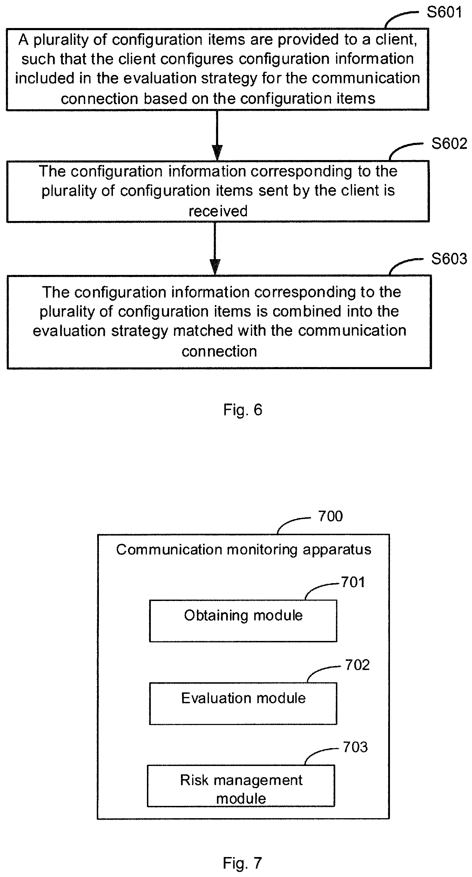

In this embodiment of the present disclosure, as shown in Fig. 6, the above communication monitoring method may further include steps below.

In step S601, a plurality of configuration items are provided to a client, such that the client configures configuration information included in the evaluation strategy for the communication connection based on the configuration items.

In order to obtain the first weight coefficient combination, a plurality of certificate dimensions and the second weight coefficient combination included in the structure of the certificate score, a plurality of address dimensions and the third weight coefficient combination included in the structure of the address score, and a plurality of reputation dimensions and the fourth weight coefficient combination included in the structure of the address reputation score required in the above embodiments, the plurality of configuration items provided for the user through the client may include:

a plurality of first weight configuration items corresponding to the first weight coefficient combination; a plurality of optional certificate dimension configuration items corresponding to the structure of the certificate score; a plurality of second weight configuration items included in the second weight coefficient combination corresponding to the structure of the certificate score; a plurality of optional address dimension configuration items corresponding to the structure of the address score; a plurality of third weight configuration items corresponding to the third weight coefficient combination included in the structure of the address score, and a plurality of optional reputation dimension configuration items corresponding to the structure of the address reputation score; and a plurality of fourth weight configuration items included in the fourth weight coefficient combination corresponding to the structure of the address reputation score.

Correspondingly, the configuration information may include multiple types of the following information: the first weight coefficient combination including weights configured by the plurality of first weight configuration items; the certificate dimensions configured by the plurality of optional certificate dimension configuration items; the second weight coefficient combination including weights configured by the plurality of second weight configuration items; the address dimensions configured by the plurality of optional address dimension configuration items; the third weight coefficient combination including weights configured by the plurality of third weight configuration items; the reputation dimensions configured by the plurality of optional reputation dimension configuration items; and the fourth weight coefficient combination including weights configured by the plurality of fourth weight configuration items.

It is worth noting that the certificate dimensions configured by the plurality of optional certificate dimension configuration items and the second weight coefficient combination including the weights configured by the plurality of second weight configuration items constitute a part of the structure of the certificate score in the above embodiment; the address dimensions configured by the plurality of optional address dimension configuration items and the third weight coefficient combination including the weights configured by the plurality of third weight configuration items constitute a part of the structure of the address score in the above embodiment; and the reputation dimensions configured by the plurality of optional reputation dimension configuration items and the fourth weight coefficient combination including the weights configured by the plurality of fourth weight configuration items constitute a part of the structure of the address reputation score in the above embodiment.

In step S602, the configuration information corresponding to the plurality of configuration items sent by the client is received.

In step S603, the configuration information corresponding to the plurality of configuration items is combined into the evaluation strategy matched with the communication connection.

The required evaluation strategy may be flexibly configured for the communication connection through the configuration information, in order to better meet the evaluation requirements for communication connection security.

It is worth noting that the communication monitoring method provided by the above embodiment may be implemented by a gateway, an intermediate node, or a proxy node.

Fig. 7 is a schematic diagram of the main modules of a communication monitoring apparatus according to one embodiment of the present disclosure.

As shown in Fig. 7, the communication monitoring apparatus 700 according to one embodiment of the present disclosure mainly includes an obtaining module 701, an evaluation module 702, and a risk management module 703, where

the obtaining module 701 is configured to obtain, in response to the establishment of a communication connection between two communication nodes, traffic data related to the communication connection;

the evaluation module 702 is configured to: extract node feature information from the traffic data; and evaluate a comprehensive score of the communication connection based on the node feature information and a preset evaluation strategy matched with the communication connection; and

the risk management module 703 is configured to determine whether the comprehensive score meets a preset communication security condition matched with the communication connection: if yes, determine that the communication connection is secure; otherwise, determine that the communication connection is risky.

In this embodiment of the present disclosure, the evaluation module 702 is further configured to: detect a handshake protocol data packet in the traffic data; and extract a source protocol address, a destination protocol address, a port, and certificate information from the handshake protocol data packet.

In this embodiment of the present disclosure, the evaluation module 702 is further configured to: determine a certificate score, an address score, and a reputation score related to the communication connection based on the source protocol address, the destination protocol address, the port, and the certificate information; and calculate the comprehensive score of the communication connection by using the certificate score, the address score, the reputation score, and a first weight coefficient combination configured in the evaluation strategy.

In this embodiment of the present disclosure, the evaluation module 702 is further configured to: determine a structure of the certificate score configured in the evaluation strategy, where the structure of the certificate score includes a second weight coefficient combination and any one or more of a certificate legality dimension, a certificate validity dimension, a certificate popularity dimension, and a certificate blacklist dimension; calculate a corresponding dimension score for each dimension included in the structure of the certificate score; and calculate the certificate score based on the dimension score corresponding to each dimension included in the structure of the certificate score and the second weight coefficient combination.

In this embodiment of the present disclosure, the evaluation module 702 is further configured to: in the case where the structure of the certificate score includes the certificate legality dimension, verify the legality of the certificate information by using a preset root certificate; and calculate a certificate validity score based on a verification result and a certificate validity calculation strategy configured in the evaluation strategy.

In this embodiment of the present disclosure, the evaluation module 702 is further configured to: in the case where the structure of the certificate score includes the certificate validity dimension, determine whether the certificate validity time included in the certificate information is valid; and calculate a certificate validity score based on a determination result and a validity scoring strategy configured in the evaluation strategy.

In this embodiment of the present disclosure, the evaluation module 702 is further configured to: in the case where the structure of the certificate score includes the certificate popularity dimension, search for the certificate information in stored historical data and count a certificate frequency of the certificate information within a set period; and calculate a certificate popularity score based on the counted certificate frequency and a popularity calculation strategy configured in the evaluation strategy.

In this embodiment of the present disclosure, the evaluation module 702 is further configured to: in the case where the structure of the certificate score includes the certificate blacklist dimension, search for whether the certificate information exists in a set certificate blacklist; and calculate a certificate blacklist score based on a search result and a certificate blacklist calculation strategy configured in the evaluation strategy.

In this embodiment of the present disclosure, the evaluation module 702 is further configured to: determine a structure of the address score configured in the evaluation strategy, where the structure of the address score includes a third weight coefficient combination and any one or more of a link pair popularity dimension, a service popularity dimension, a destination protocol address popularity dimension, a source protocol address popularity dimension, and an address blacklist dimension; calculate a dimension score corresponding to each dimension included in the structure of the address score; and calculate the address score based on the dimension score corresponding to each dimension included in the structure of the address score and the third weight coefficient combination.

In this embodiment of the present disclosure, the evaluation module 702 is further configured to: in the case where the structure of the address score includes the link pair popularity dimension, search for a link pair including the source protocol address, the destination protocol address, and the port in the stored historical data, and count a frequency of out the link pair within the set time period; and calculate a link pair popularity score based on the frequency of out the link pair and a link pair popularity calculation strategy configured in the evaluation strategy.

In this embodiment of the present disclosure, the evaluation module 702 is further configured to: in the case where the structure of the address score includes the service popularity dimension, search for a service combination including the destination protocol address and the port in the stored historical data, and count a frequency of searching for the service combination within the set time period; and calculate a service popularity score based on the frequency of searching out the service combination and a service popularity calculation strategy configured in the evaluation strategy.

In this embodiment of the present disclosure, the evaluation module 702 is further configured to: in the case where the structure of the address score includes the destination protocol address popularity dimension, search for the destination protocol address in the stored historical data, and count a frequency of searching for the destination protocol address within the set time period; and calculate a destination protocol address popularity score based on the frequency of searching for the destination protocol address and a destination protocol address popularity calculation strategy configured in the evaluation strategy.

In this embodiment of the present disclosure, the evaluation module 702 is further configured to: in the case where the structure of the address score includes the source protocol address popularity dimension, search for the source protocol address in the stored historical data, and count a frequency of searching for the source protocol address within the set time period; and calculate a source protocol address popularity score based on the frequency of searching for the source protocol address and a source protocol address popularity calculation strategy configured in the evaluation strategy.

In this embodiment of the present disclosure, the evaluation module 702 is further configured to: in the case where the structure of the address score includes the address blacklist dimension, search for whether the source protocol address and/or the destination protocol address exist/exists in a set address blacklist; and calculate an address blacklist score based on a search result and an address blacklist calculation strategy configured in the evaluation strategy.

In this embodiment of the present disclosure, the evaluation module 702 is further configured to: determine a structure of the address reputation score configured in the evaluation strategy, where the structure of the reputation score includes a fourth weight coefficient combination and any one or more of a certificate level dimension, a certificate signing authority dimension, a certificate status dimension, a geographical location dimension, an address reputation dimension, and a time dimension; calculate a dimension score corresponding to each dimension included in the structure of the reputation score; and calculate the reputation score based on the dimension score corresponding to each dimension included in the structure of the reputation score and the fourth weight coefficient combination.

In this embodiment of the present disclosure, the evaluation module 702 is further configured to: in the case where the structure of the reputation score includes the certificate level dimension, determine a certificate level and a certificate type corresponding to the certificate information are determined; and calculate a certificate level score based on the determined certificate level and certificate type and a level calculation strategy configured in the evaluation strategy.

In this embodiment of the present disclosure, the evaluation module 702 is further configured to: in the case where the structure of the reputation score includes the certificate signing authority dimension, determine a signing authority corresponding to the certificate information; and calculate a signing authority score based on the determined signing authority and a signing authority calculation strategy configured in the evaluation strategy.

In this embodiment of the present disclosure, the evaluation module 702 is further configured to: in the case where the structure of the reputation score includes the certificate signing authority dimension, determine a revocation status of the certificate information; and calculate a certificate status score based on the determined revocation status and a certificate status calculation strategy configured in the evaluation strategy.

In this embodiment of the present disclosure, the evaluation module 702 is further configured to: in the case where the structure of the reputation score includes the certificate signing authority dimension, determine a revocation status of the certificate information; and calculate a certificate status score based on the determined revocation status and a certificate status calculation strategy configured in the evaluation strategy.

In this embodiment of the present disclosure, the evaluation module 702 is further configured to: in the case where the structure of the reputation score includes the certificate signing authority dimension, determine a domain name reputation corresponding to the destination protocol address; and calculate a domain name reputation score based on the determined domain name reputation and a domain name reputation calculation strategy configured in the evaluation strategy.

In this embodiment of the present disclosure, the evaluation module 702 is further configured to: in the case where the structure of the reputation score includes the geographical location dimension, determine geographical locations/a geographical location of the source protocol address and/or the destination protocol address; and calculate a geographical location score based on the geographical locations/the geographical location of the source protocol address and/or the destination protocol address and a geographical location calculation strategy configured in the evaluation strategy.

In this embodiment of the present disclosure, the evaluation module 702 is further configured to: in the case where the structure of the reputation score includes the address reputation dimension, determine reputation statuses/a reputation status of the source protocol address and/or the destination protocol address; and calculate an address reputation score based on the reputation statuses/the reputation status of the source protocol address and/or the destination protocol address and an address reputation calculation strategy configured in the evaluation strategy.

In this embodiment of the present disclosure, the evaluation module 702 is further configured to: in the case where the structure of the reputation score includes the time dimension, determine domain name binding time of the destination protocol address; and calculate a domain name binding time score based on the domain name binding time of the destination protocol address and a domain name binding calculation strategy configured in the evaluation strategy.

In this embodiment of the present disclosure, as shown in Fig. 7, the above communication monitoring apparatus may further include an interactive module 704, where

the interactive module 704 is configured to: provide a plurality of configuration items to a client, such that the client configures configuration information included in the evaluation strategy for the communication connection based on the configuration items; receive the configuration information corresponding to the plurality of configuration items sent by the client; and combine the configuration information corresponding to the plurality of configuration items into the evaluation strategy matched with the communication connection.

In this embodiment of the present disclosure, the configuration information may include the first weight coefficient combination, the structure of the certificate score, the structure of the address score, and the structure of the address reputation score.

In this embodiment of the present disclosure, the communication security condition matched with the communication connection and set by the risk management module 703 is as follows: the comprehensive score is not less than a preconfigured communication security threshold; or, the comprehensive score is not more than the preconfigured communication security threshold.

In this embodiment of the present disclosure, the risk management module 703 is further configured to: interrupt the communication connection; and/or, issue a risk warning for the communication connection.

The above communication monitoring apparatus may be arranged at a gateway, an intermediate node, or a proxy node.

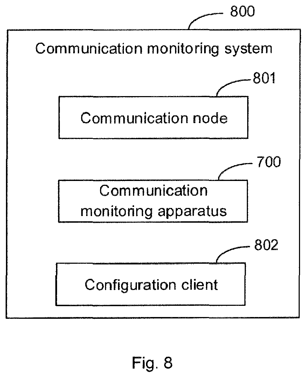

As shown in Fig. 8, an embodiment of the present disclosure provides a communication monitoring system 800, including a plurality of communication nodes 801 and the communication monitoring apparatus 700 provided by any one of the above embodiments, where the communication monitoring apparatus 700 is configured to monitor communication traffic between any two communication nodes 801 in the plurality of communication nodes 801.

In this embodiment of the present disclosure, as shown in Fig. 8, the communication monitoring system 800 may further include a configuration client 802, where

the configuration client 802 is configured to receive user configured configuration information configured by a user for an evaluation strategy and a communication security condition and send the configuration information for the evaluation strategy and the communication security condition to the communication monitoring apparatus 700; and

the communication monitoring apparatus 700 is configured to determine the evaluation strategy and the communication security condition for a communication connection based on the configuration information.

In order to clearly illustrate the communication monitoring method provided by the embodiment of the present disclosure, a process of interaction among the devices included in the communication monitoring system is described in detail below by using a scenario where an intranet terminal accesses to an extranet server and a scenario where the terminal interacts with the server to complete a transfer service as examples separately.

For the application scenario where the intranet terminal accesses to the extranet server, the corresponding communication monitoring system may include the communication nodes (such as the intranet terminal and the extranet server) and the communication monitoring apparatus.

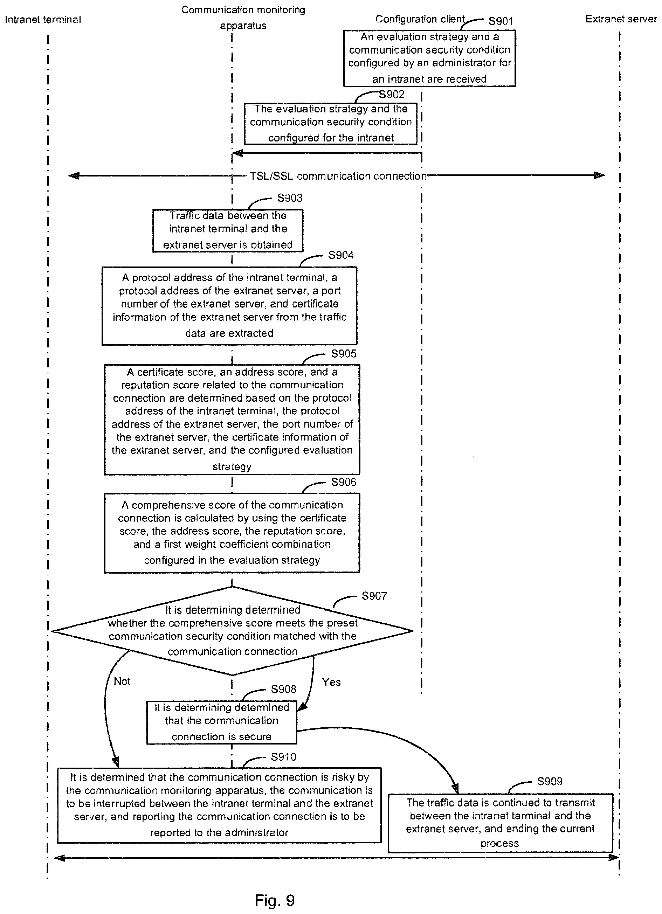

As shown in Fig. 9, for the application scenario where the intranet terminal accesses to the extranet server, the communication monitoring method may include the following steps:

step S901: an evaluation strategy and a communication security condition configured by an administrator for an intranet are received by a configuration client;

step S902: the evaluation strategy and the communication security condition configured for the intranet to a communication monitoring apparatus are sent by the configuration client;

step S903: a TSL/SSL communication connection between an intranet terminal and an extranet server is established; traffic data between the intranet terminal and the extranet server is obtained by the communication monitoring apparatus;

step S904: a protocol address of the intranet terminal, a protocol address of the extranet server, a port number of the extranet server, and certificate information of the extranet server from the traffic data are extracted by the communication monitoring apparatus;

step S905: a certificate score, an address score, and a reputation score related to the communication connection are determined based on the protocol address of the intranet terminal, the protocol address of the extranet server, the port number of the extranet server, the certificate information of the extranet server, and the configured evaluation strategy by the communication monitoring apparatus;

step S906: a comprehensive score of the communication connection is calculated by using the certificate score, the address score, the reputation score, and a first weight coefficient combination configured in the evaluation strategy by the communication monitoring apparatus;

step S907: it is determined whether the comprehensive score meets the preset communication security condition matched with the communication connection by the communication monitoring apparatus: if yes, performing step S908; otherwise, performing step S910;

step S908: it is determined that the communication connection is secure by the communication monitoring apparatus;

step S909: the traffic data is continued to transmit between the intranet terminal and the extranet server, and ending the current process; and

step S910: it is determined that the communication connection is risky by the communication monitoring apparatus, the communication is to be interrupted between the intranet terminal and the extranet server, and the communication connection is to be reported to the administrator.

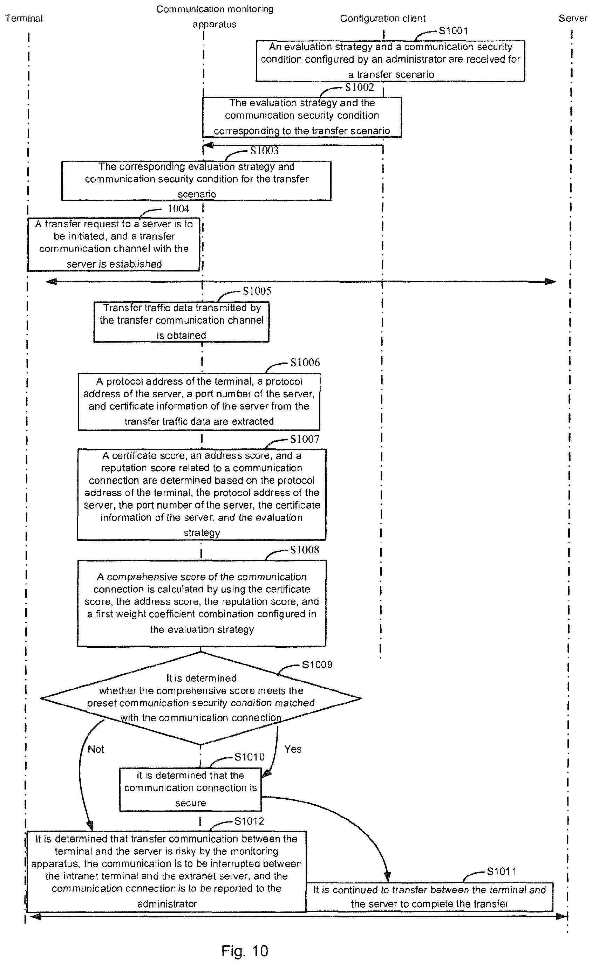

As shown in Fig. 10, for an application scenario of online transfer, the communication monitoring method may include the following steps:

step S1001: an evaluation strategy and a communication security condition configured by an administrator are received for a transfer scenario by a configuration client;

step S1002: the evaluation strategy and the communication security condition corresponding to the transfer scenario to a communication monitoring apparatus are sent by the configuration client;

step S1003: the corresponding evaluation strategy and communication security condition for the transfer scenario are configured by the communication monitoring apparatus;

step S1004: a transfer request to a server is to be initiated, and a transfer communication channel with the server is established by a terminal;

step S1005: transfer traffic data transmitted by the transfer communication channel is obtained by the communication monitoring apparatus;

step S1006: a protocol address of the terminal, a protocol address of the server, a port number of the server, and certificate information of the server from the transfer traffic data are extracted by the communication monitoring apparatus;

step S1007: a certificate score, an address score, and a reputation score related to a communication connection are determined based on the protocol address of the terminal, the protocol address of the server, the port number of the server, the certificate information of the server, and the evaluation strategy by the communication monitoring apparatus; and

step S1008: a comprehensive score of the communication connection is calculated by using the certificate score, the address score, the reputation score, and a first weight coefficient combination configured in the evaluation strategy;

step S1009: it is determined whether the comprehensive score meets the preset communication security condition matched with the communication connection by the monitoring apparatus: if yes, performing step S1010; otherwise, performing step S1012;

step S1010: it is determined that the communication connection is secure by the monitoring apparatus;

step S1011: it is continued to transfer between the terminal and the server to complete the transfer, and ending the current process; and

step S1012: it is determined that transfer communication between the terminal and the server is risky by the monitoring apparatus, communication between the intranet terminal and the extranet server is to be interrupted, and the communication connection is to be reported to the administrator.

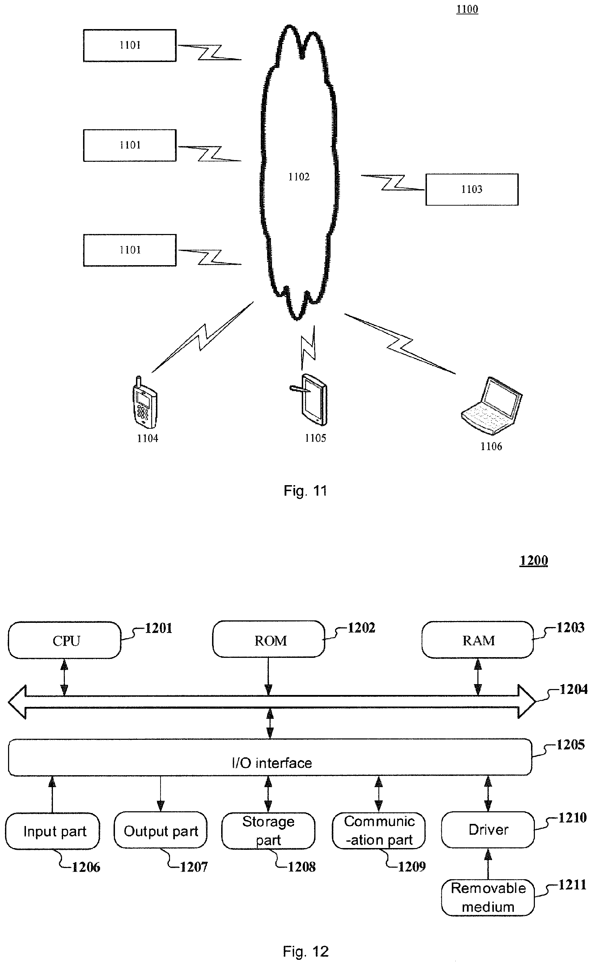

Fig. 11 shows an exemplary system architecture 1100 capable of using the communication monitoring method or the communication monitoring apparatus according to the embodiment of the present disclosure.

As shown in Fig. 11, the system architecture 1100 may include a plurality of communication nodes 1101, a network 1102, a monitoring node 1103, and terminal devices 1104, 1105, and 1106. The network 1102 is a medium used to provide communication links between any two communication nodes 1101 in the plurality of communication nodes 1101, between the monitoring node and the communication nodes 1101, and between the monitoring node 1103 and the terminal devices 1104, 1105, and 1106. The network 1102 may include various connection types, such as wired and wireless communication links or fiber optic cables.

A user can use the terminal devices 1104, 1105, and 1106 to interact with the monitoring node 1103 through the network 1102, in order to obtain an evaluation strategy and/or a communication security condition for a communication connection between the plurality of communication nodes. The evaluation strategy may include a first weight coefficient combination, one or more dimensions and a second weight coefficient combination included in a structure of a certificate score, a certificate validity calculation strategy, a validity scoring strategy, a popularity calculation strategy, a certificate blacklist calculation strategy, one or more dimensions and a third weight coefficient combination included in a structure of an address score, a link pair popularity calculation strategy, a service popularity calculation strategy, a destination protocol address popularity calculation strategy, a source protocol address popularity calculation strategy, an address blacklist calculation strategy, one or more dimensions and a fourth weight coefficient combination included in a structure of an address reputation score, a level calculation strategy, a signing authority calculation strategy, a certificate status calculation strategy, a certificate status calculation strategy, a domain name reputation calculation strategy, a geographical location calculation strategy, an address reputation calculation strategy, a domain name binding calculation strategy, and the like. The configured communication security condition may be a communication security threshold or the like. Thus, different communication security requirements are met.

When a communication connection is established between any two communication nodes 1101, the monitoring node 1103 monitors communication traffic of the communication connection, to monitor whether a communication channel established by the two communication nodes 1101 in the communication connection is legal through the configured evaluation strategy matched with the communication connection.

Various communication client applications, such as shopping applications, web browser applications, search applications, instant messaging tools, email clients, and social platform software (which are examples only), may be installed in the mobile terminal devices 1104, 1105, and 1106, and the communication nodes.

The mobile terminal devices 1104, 1105, and 1106 may be various electronic devices having display screens and supporting web browsing, including but not limited to smartphones, tablets, and so on.

The monitoring node 1103 may be a server providing various services, such as a background management server providing support for the security of the communication connection between any two communication nodes (which is an example only). The background management server can perform analysis and other processing on obtained information of the two communication nodes in the communication connection, and provide a processing result (for example, the communication channel is secure or risky, which is an example only) to an administrator.

It should be noted that the communication monitoring method provided by the embodiment of the present disclosure is generally executed by the monitoring node 1103.

It should be understood that the number of communication nodes, monitoring nodes, terminal devices, and networks in Fig. 11 is merely schematic. According to the requirements of implementation, there may be any number of communication nodes, monitoring nodes, terminal devices, and networks.

Reference is made to Fig. 12 below, which is a schematic structural diagram of a computer system 1200 suitable for implementing communication nodes in an embodiment of the present application. A mobile terminal device or a receipt client shown in Fig. 12 is merely an example and should not impose any limitation to the function and scope of application of the embodiment of the present application.

As shown in Fig. 12, the computer system 1200 includes a central processing unit (CPU) 1201 which may perform various appropriate actions and processes according to a program stored in a read-only memory (ROM) 1202 or loaded into a random access memory (RAM) 1203 from a storage part 1208. Various programs and data required for operation of the system 1200 are further stored in the RAM 1203. The CPU 1201, the ROM 1202, and the RAM 1203 are connected to one another through a bus 1204. An input/output (I/O) interface 1205 is also connected to the bus 1204.

The following components are connected to the I/O interface 1205: an input part 1206 including a keyboard, a mouse, and the like; an output part 1207 including, for example, a cathode ray tube (CRT), a liquid crystal display (LCD), a loudspeaker, and the like; a storage part 1208 including a hard disk and the like; and a communication part 1209 including, for example, an LAN card and a network interface card such as a modem. The communication part 1209 performs communication processing through a network such as the Internet. A driver 1210 is also connected to the I/O interface 1205 as needed. A removable medium 1211, such as a magnetic disk, a compact disc, a magneto-optical disk, and a semiconductor memory, is installed on the driver 1210 as needed, such that a computer program read therefrom can be installed in the storage part 1208 as needed.

In particular, according to the embodiment of the present disclosure, the process described above with reference to the flowchart may be implemented as a computer software program. For example, an embodiment of the present disclosure provides a computer program product, including a computer program on a computer-readable medium, where the computer program contains a program code for performing the method shown in the flowchart. In such embodiment, the computer program may be downloaded and installed from the network through the communication part 1209, and/or may be installed from the removable medium 1211. When the computer program is executed by the CPU 1201, the above functions defined in the system according to the present application are implemented.

It should be noted that the computer-readable medium according to the present disclosure may be a computer-readable signal medium, a computer-readable storage medium, or any combination thereof. The computer-readable storage medium may be, for example, but not limited to, electric, magnetic, optical, electromagnetic, infrared, or semiconductor systems, apparatuses, or devices, or any combination thereof. More specific examples of the computer-readable storage medium may include but not limited to an electrical connection having one or more wires, a portable computer disk, a hard disk, an RAM, an ROM, an erasable programmable read-only memory (EPROM or flash memory), an optical fiber, a portable compact disc-read only memory (CD-ROM), an optical storage device, a magnetic storage device, or any suitable combination thereof. In the present application, the computer-readable storage medium may be any tangible medium containing or storing a program which may be used by or in combination with an instruction execution system, apparatus, or device. In the present application, the computer-readable signal medium may include a data signal propagated in a baseband or as a part of a carrier, the data signal carrying a computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable medium can send, propagate, or transmit a program used by or in combination with an instruction execution system, apparatus, or device. The program code contained in the computer-readable medium may be transmitted by any suitable medium, including but not limited to a wireless medium, a wired medium, a fiber optic cable, a radio frequency (RF), or any suitable combination thereof.

The flowcharts and block diagrams in the accompanying drawings illustrate the possibly implemented architectures, functions, and operations of the system, method, and computer program product according to various embodiments of the present application. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram or the flowchart, and a combination of the blocks in the block diagram /or the flowchart may be implemented by a dedicated hardware-based system that executes specified functions or operations, or may be implemented by a combination of dedicated hardware and computer instructions.

The related modules described in the embodiments of the present disclosure may be implemented by means of software, or may be implemented by means of hardware. The described modules may also be arranged in the processor, which, for example, may be described as: a processor includes an obtaining module, an evaluation module, and a risk management module. The names of these modules do not constitute any limitation to the modules themselves in a case. For example, the obtaining module may be further described as a module for obtaining, in response to establishment of a communication connection between two communication nodes, traffic data related to the communication connection.

In another aspect, the present disclosure further provides a computer-readable medium which may be included in the device described in the above embodiment or may exist alone without being assembled into the device. The computer-readable medium carries one or more programs. When the one or more programs are executed by one device, the device is caused to: in response to establishment of a communication connection between two communication nodes, traffic data related to the communication connection is obtained; node feature information is extracted from the traffic data; a comprehensive score of the communication connection is evaluated based on the node feature information and a preset evaluation strategy matched with the communication connection; and it is determined whether the comprehensive score meets a preset communication security condition matched with the communication connection: if yes, it is determined that the communication connection is secure; otherwise, it is determined that the communication connection is risky.

According to the technical solution of the embodiment of the present disclosure, because the comprehensive score for evaluating the communication connection is based on the node feature information extracted from the traffic data and the evaluation strategy matched with the communication connection, the comprehensive score can more truly reflect a status of the communication connection. Therefore, the determination whether the communication connection is secure or risky based on the comprehensive score can effectively improve the accuracy of a monitoring result, thereby effectively improving the communication security.

The above specific embodiments do not constitute any limitation to the scope of protection of the present disclosure. It should be understood by those skilled in the art that various modifications, combinations, subcombinations, and substitutions may occur depending on design requirements and other factors. Any modifications, equivalent substitutions, improvements, etc. made within the spirit and principle of the present disclosure should all be included within the scope of protection of the present disclosure.

## Claims

1.   A communication monitoring method, comprising:

obtaining, in response to establishment of a communication connection between two communication nodes, traffic data related to the communication connection;

extracting node feature information from the traffic data;

evaluating a comprehensive score of the communication connection based on the node feature information and a preset evaluation strategy matched with the communication connection; and

determining whether the comprehensive score meets a preset communication security condition matched with the communication connection: if yes, determining that the communication connection is secure; otherwise, determining that the communication connection is risky.

2.   The method as claimed in claim 1, wherein the extracting node feature information from the traffic data comprises:

detecting a handshake protocol data packet in the traffic data; and

extracting a source protocol address, a destination protocol address, a port, and certificate information from the handshake protocol data packet.

3.   The method as claimed in claim 2, wherein the evaluating a comprehensive score of the communication connection comprises:

determining a certificate score, an address score, and a reputation score related to the communication connection based on the source protocol address, the destination protocol address, the port, and the certificate information; and calculating the comprehensive score of the communication connection by using the certificate score, the address score, the reputation score, and a first weight coefficient combination configured in the evaluation strategy.

4.   The method as claimed in claim 3, wherein the determining a certificate score related to the communication connection comprises:

determining a structure of the certificate score configured in the evaluation strategy, wherein the structure of the certificate score comprises a second weight coefficient combination and any one or more of a certificate legality dimension, a certificate validity dimension, a certificate popularity dimension, and a certificate blacklist dimension;

calculating a corresponding dimension score for each dimension comprised in the structure of the certificate score; and calculating the certificate score based on the dimension score corresponding to each dimension comprised in the structure of the certificate score and the second weight coefficient combination.

5.   The method as claimed in claim 4, wherein the calculating a corresponding dimension score for each dimension comprised in the structure of the certificate score comprises:

in a case where the structure of the certificate score comprises the certificate legality dimension,

verifying legality of the certificate information by using a preset root certificate; and calculating a certificate validity score based on a verification result and a certificate validity calculation strategy configured in the evaluation strategy.

6.   The method as claimed in claim 4, wherein the calculating a corresponding dimension score for each dimension comprised in the structure of the certificate score comprises:

in a case where the structure of the certificate score comprises the certificate validity dimension,

determining whether certificate validity time comprised in the certificate information is valid; and

calculating a certificate validity duration score based on a determination result and a validity scoring strategy configured in the evaluation strategy.

7. The method as claimed in claim 4, wherein the calculating a corresponding dimension score for each dimension comprised in the structure of the certificate score comprises:

in a case where the structure of the certificate score comprises the certificate popularity dimension,
searching for the certificate information in stored historical data and counting a certificate frequency of the certificate information within a set period; and
calculating a certificate popularity score based on the counted certificate frequency and a popularity calculation strategy configured in the evaluation strategy.

8. The method as claimed in claim 4, wherein the calculating a corresponding dimension score for each dimension comprised in the structure of the certificate score comprises:

in a case where the structure of the certificate score comprises the certificate blacklist dimension,
searching for whether the certificate information exists in a set certificate blacklist; and
calculating a certificate blacklist score based on a search result and a certificate blacklist calculation strategy configured in the evaluation strategy.

9. The method as claimed in claim 3, wherein the determining an address score related to the communication connection comprises:

determining a structure of the address score configured in the evaluation strategy, wherein the structure of the address score comprises a third weight coefficient combination and any one or more of a link pair popularity dimension, a service popularity dimension, a destination protocol address popularity dimension, a source protocol address popularity dimension, and an address blacklist dimension;
calculating a corresponding dimension score for each dimension comprised in the structure of the address score; and
calculating the address score based on the dimension score corresponding to each dimension comprised in the structure of the address score and the third weight coefficient combination.

10. The method as claimed in claim 9, wherein the calculating a corresponding dimension score for each dimension comprised in the structure of the address score comprises:

in a case where the structure of the address score comprises a link pair popularity dimension,
searching for a link pair comprising the source protocol address, the destination protocol address, and the port in stored historical data, and counting a frequency of searching for the link pair within the set time period; and
calculating a link pair popularity score based on the frequency of searching for the link pair and a link pair popularity calculation strategy configured in the evaluation strategy.

11. The method as claimed in claim 9, wherein the calculating a corresponding dimension score for each dimension comprised in the structure of the address score comprises:

in a case where the structure of the address score comprises the service popularity dimension,
searching for a service combination comprising the destination protocol address and the port in stored historical data, and counting a frequency of searching for the service combination within the set time period; and
calculating a service popularity score based on the frequency of searching for the service combination and a service popularity calculation strategy configured in the evaluation strategy.

12. The method as claimed in claim 9, wherein the calculating a corresponding dimension score for each dimension comprised in the structure of the address score comprises:

in a case where the structure of the address score comprises the destination protocol address popularity dimension,
searching for the destination protocol address in stored historical data, and counting a frequency of searching for the destination protocol address within the set time period; and
calculating a destination protocol address popularity score based on the frequency of searching for the destination protocol address and a destination protocol address popularity calculation strategy configured in the evaluation strategy.

**13.** The method as claimed in claim 9, wherein the calculating a corresponding dimension score for each dimension comprised in the structure of the address score comprises:

in a case where the structure of the address score comprises the source protocol address popularity dimension,
searching for the source protocol address in stored historical data, and counting a frequency of searching for the source protocol address within the set time period; and
calculating a source protocol address popularity score based on the frequency of searching for the source protocol address and a source protocol address popularity calculation strategy configured in the evaluation strategy.

**14.** The method as claimed in claim 9, wherein the calculating a corresponding dimension score for each dimension comprised in the structure of the address score comprises:

in a case where the structure of the address score comprises the address blacklist dimension,
searching for whether the source protocol address and/or the destination protocol address exist/exists in a set address blacklist; and
calculating an address blacklist score based on a search result and an address blacklist calculation strategy configured in the evaluation strategy.

**15.** The method as claimed in claim 3, wherein the determining a reputation score related to the communication connection comprises:

determining a structure of the address reputation score configured in the evaluation strategy, wherein the structure of the reputation score comprises a fourth weight coefficient combination and any one or more of a certificate level dimension, a certificate signing authority dimension, a certificate status dimension, a geographical location dimension, an address reputation dimension, and a time dimension; and
calculating a corresponding dimension score for each dimension comprised in the structure of the reputation score; and
calculating the reputation score based on the dimension score corresponding to each dimension comprised in the structure of the reputation score and the fourth weight coefficient combination.

**16.** The method as claimed in claim 15, wherein the calculating a corresponding dimension score for each dimension comprised in the structure of the reputation score comprises:

in a case where the structure of the reputation score comprises the certificate level dimension, determining a certificate level and a certificate type corresponding to the certificate information; and
calculating a certificate level score based on the determined certificate level and certificate type and a level calculation strategy configured in the evaluation strategy.

**17.** The method as claimed in claim 15, wherein the calculating a corresponding dimension score for each dimension comprised in the structure of the reputation score comprises:

in a case where the structure of the reputation score comprises the certificate signing authority dimension,
determining a signing authority corresponding to the certificate information; and
calculating a signing authority score based on the determined signing authority and a signing authority calculation strategy configured in the evaluation strategy.

**18.** The method as claimed in claim 15, wherein the calculating a corresponding dimension score for each dimension comprised in the structure of the reputation score comprises:

in a case where the structure of the reputation score comprises the certificate signing authority dimension,
determining a revocation status of the certificate information; and
calculating a certificate status score based on the determined revocation status and a certificate status calculation strategy configured in the evaluation strategy.

**19.** The method as claimed in claim 15, wherein the calculating a corresponding dimension score for each dimension comprised in the structure of the reputation score comprises:

in a case where the structure of the reputation score comprises the certificate signing authority dimension,
determining a revocation status of the certificate information; and
calculating a certificate status score based on the determined revocation status and a certificate status calculation strategy configured in the evaluation strategy.

**20.** The method as claimed in claim 15, wherein the calculating a corresponding dimension score for each dimension comprised in the structure of the reputation score comprises:

in a case where the structure of the reputation score comprises a certificate signing authority dimension,
determining a domain name reputation corresponding to the destination protocol address; and
calculating a domain name reputation score based on the determined domain name reputation and a domain name reputation calculation strategy configured in the evaluation strategy.

**21.** The method as claimed in claim 15, wherein the calculating a corresponding dimension score for each dimension comprised in the structure of the reputation score comprises:

in a case where the structure of the reputation score comprises the geographical location dimension,
determining geographical locations/a geographical location of the source protocol address and/or the destination protocol address; and
calculating a geographical location score based on the geographical locations/the geographical location of the source protocol address and/or the destination protocol address and a geographical location calculation strategy configured in the evaluation strategy.

**22.** The method as claimed in claim 15, wherein the calculating a corresponding dimension score for each dimension comprised in the structure of the reputation score comprises:

in a case where the structure of the reputation score comprises the address reputation dimension,
determining reputation statuses/a reputation status of the source protocol address and/or the destination protocol address; and
calculating an address reputation score based on the reputation statuses/the reputation status of the source protocol address and/or the destination protocol address and an address reputation calculation strategy configured in the evaluation strategy.

**23.** The method as claimed in claim 15, wherein the calculating a corresponding dimension score for each dimension comprised in the structure of the reputation score comprises:

in a case where the structure of the reputation score comprises the time dimension,
determining domain name binding time of the destination protocol address; and
calculating a domain name binding time score based on the domain name binding time of the destination protocol address and a domain name binding calculation strategy configured in the evaluation strategy.

**24.** The method as claimed in any one of claims 1 to 23, further comprising:

providing a plurality of configuration items to a client, such that the client configures configuration information comprised in the evaluation strategy for the communication connection based on the configuration items;
receiving configuration information corresponding to the plurality of the configuration items sent by the client; and
combining configuration information corresponding to the plurality of the configuration items into the evaluation strategy matched with the communication connection.

**25.** The method as claimed in claim 24, wherein the configuration information comprises any one or more pieces of the following information:
the first weight coefficient combination, a plurality of certificate dimensions and the second weight coefficient combination comprised in a structure of the certificate score, a plurality of address dimensions and the third weight coefficient combination comprised in a structure of the address score, and a plurality of reputation dimensions and the fourth weight coefficient combination comprised in a structure of the address reputation score.

**26.** The method as claimed in claim 1, wherein the communication security condition matched with the communication connection comprises:

the comprehensive score is not less than a preconfigured communication security threshold; or,
the comprehensive score is not more than the preconfigured communication security threshold.

**27.** The method as claimed in claim 1, wherein after the determining that the communication connection is risky, the method further comprises:

interrupting the communication connection; and/or,
issuing a risk warning for the communication connection.

28. A communication monitoring apparatus, comprising:

an obtaining module configured to obtain, in response to establishment of a communication connection between two communication nodes, traffic data related to the communication connection;

an evaluation module configured to extract node feature information from the traffic data; and evaluate a comprehensive score of the communication connection based on the node feature information and a preset evaluation strategy matched with the communication connection; and

a risk management module configured to determine whether the comprehensive score meets a preset communication security condition matched with the communication connection: if yes, determine that the communication connection is secure; otherwise, determine that the communication connection is risky.

29. A communication monitoring system, comprising a plurality of communication nodes and the communication monitoring apparatus as claimed in claim 29.

30. The system as claimed in claim 29, further comprising a configuration client, wherein

the configuration client is configured to receive user configured configuration information configured by a user for an evaluation strategy and a communication security condition and send the configuration information for the evaluation strategy and the communication security condition to the communication monitoring apparatus; and

the communication monitoring apparatus is configured to determine the evaluation strategy and the communication security condition for a communication connection based on the configuration information.

31. An electronic device, comprising:

one or more processors; and
a memory configured to store one or more programs, wherein

when the one or more programs are executed by the one or more processors, the one or more processors are caused to implement the method according to any one of claims 1 to 27.

32. A computer-readable medium having a computer program stored thereon, wherein the computer program, when executed by a processor, implements the method according to any one of claims 1 to 27.

In response to establishment of a communication connection between two communication nodes, traffic data related to the communication connection is obtained ⌐ S101

Node feature information is extracted from the traffic data ⌐ S102

A comprehensive score of the communication connection is evaluated based on the node feature information and a preset evaluation strategy matched with the communication connection ⌐ S103

It is determined whether the comprehensive score meets a preset communication security condition matched with the communication connection ⌐ S104

Not

S106

It is determined that the communication connection is risky

yes

It is determined that the communication connection is secure ⌐ S105

Fig. 1

```
┌─────────────────────────────────────────────┐  ⌐ S201
│ A certificate score, an address score, and a │
│ reputation score related to the communication │
│ connection are determined based on the source │
│ protocol address, the destination protocol    │
│ address, the port, and the certificate        │
│ information                                    │
└─────────────────────────────────────────────┘
                        │
                        ▼
┌─────────────────────────────────────────────┐  ⌐ S202
│ The comprehensive score of the communication  │
│ connection is calculated by using the          │
│ certificate score, the address score, the      │
│ reputation score, and a first weight           │
│ coefficient combination configured in the      │
│ evaluation strategy                            │
└─────────────────────────────────────────────┘
```

Fig. 2

```
┌─────────────────────────────────────────────┐  ⌐ S301
│ A structure of the certificate score           │
│ configured in the evaluation strategy is        │
│ determined, where the structure of the          │
│ certificate score includes a second weight      │
│ coefficient combination and any one or more     │
│ of a certificate legality dimension, a          │
│ certificate validity dimension, a certificate   │
│ popularity dimension, and a certificate         │
│ blacklist dimension                             │
└─────────────────────────────────────────────┘
                        │
                        ▼
┌─────────────────────────────────────────────┐  ⌐ S302
│ A corresponding dimension score is calculated   │
│ for each dimension included in the structure    │
│ of the certificate score                        │
└─────────────────────────────────────────────┘
                        │
                        ▼
┌─────────────────────────────────────────────┐  ⌐ S303
│ The certificate score is calculated based on    │
│ the dimension score corresponding to each       │
│ dimension included in the structure of the      │
│ certificate score and the second weight         │
│ coefficient combination                         │
└─────────────────────────────────────────────┘
```

Fig. 3

S401

A structure of the address score configured in the evaluation strategy is determined, where the structure of the address score includes a third weight coefficient combination and any one or more of a link pair popularity dimension, a service popularity dimension, a destination protocol address popularity dimension, a source protocol address popularity dimension, and an address blacklist dimension

S402

A corresponding dimension score is calculated for each dimension included in the structure of the address score

S403

The address score is calculated based on the dimension score corresponding to each dimension included in the structure of the address score and the third weight coefficient combination

Fig. 4

S501

A structure of the address reputation score configured in the evaluation strategy is determined, where the structure of the reputation score includes a fourth weight coefficient combination and any one or more of a certificate level dimension, a certificate signing authority dimension, a certificate status dimension, a geographic location dimension, an address reputation dimension, and a time dimension

S502

A corresponding dimension score is calculated for each dimension included in the structure of the reputation score

S503

the reputation score is calculated based on the dimension score corresponding to each dimension included in the structure of the reputation score and the fourth weight coefficient combination

Fig. 5

S601

A plurality of configuration items are provided to a client, such that the client configures configuration information included in the evaluation strategy for the communication connection based on the configuration items

S602

The configuration information corresponding to the plurality of configuration items sent by the client is received

S603

The configuration information corresponding to the plurality of configuration items is combined into the evaluation strategy matched with the communication connection

Fig. 6

700

Communication monitoring apparatus

701

Obtaining module

702

Evaluation module

703

Risk management module

Fig. 7

Fig. 8

Intranet terminal
Communication monitoring apparatus
Configuration client — S901
Extranet server

An evaluation strategy and a communication security condition configured by an administrator for an intranet are received

S902

The evaluation strategy and the communication security condition configured for the intranet

TSL/SSL communication connection

S903

Traffic data between the intranet terminal and the extranet server is obtained

S904

A protocol address of the intranet terminal, a protocol address of the extranet server, a port number of the extranet server, and certificate information of the extranet server from the traffic data are extracted

S905

A certificate score, an address score, and a reputation score related to the communication connection are determined based on the protocol address of the intranet terminal, the protocol address of the extranet server, the port number of the extranet server, the certificate information of the extranet server, and the configured evaluation strategy

S906

A comprehensive score of the communication connection is calculated by using the certificate score, the address score, the reputation score, and a first weight coefficient combination configured in the evaluation strategy

S907

It is determining determined whether the comprehensive score meets the preset communication security condition matched with the communication connection

Not

Yes

S908

It is determining determined that the communication connection is secure

S910

It is determined that the communication connection is risky by the communication monitoring apparatus, the communication is to be interrupted between the intranet terminal and the extranet server, and reporting the communication connection is to be reported to the administrator

S909

The traffic data is continued to transmit between the intranet terminal and the extranet server, and ending the current process

Fig. 9

Terminal | Communication monitoring apparatus | Configuration client | Server

S1001
An evaluation strategy and a communication security condition configured by an administrator are received for a transfer scenario

S1002
The evaluation strategy and the communication security condition corresponding to the transfer scenario

S1003
The corresponding evaluation strategy and communication security condition for the transfer scenario

1004
A transfer request to a server is to be initiated, and a transfer communication channel with the server is established

S1005
Transfer traffic data transmitted by the transfer communication channel is obtained

S1006
A protocol address of the terminal, a protocol address of the server, a port number of the server, and certificate information of the server from the transfer traffic data are extracted

S1007
A certificate score, an address score, and a reputation score related to a communication connection are determined based on the protocol address of the terminal, the protocol address of the server, the port number of the server, the certificate information of the server, and the evaluation strategy

S1008
A comprehensive score of the communication connection is calculated by using the certificate score, the address score, the reputation score, and a first weight coefficient combination configured in the evaluation strategy

S1009
It is determined whether the comprehensive score meets the preset communication security condition matched with the communication connection

Not / Yes

S1010
it is determined that the communication connection is secure

S1012
It is determined that transfer communication between the terminal and the server is risky by the monitoring apparatus, the communication is to be interrupted between the intranet terminal and the extranet server, and the communication connection is to be reported to the administrator

S1011
It is continued to transfer between the terminal and the server to complete the transfer

Fig. 10

1100

1101

1101

1102

1103

1101

1104          1105          1106

Fig. 11

1200

CPU —1201    ROM —1202    RAM —1203

—1204

I/O interface —1205

Input part    Output part    Storage part    Communic-ation part    Driver —1210

—1206    —1207    —1208    —1209

Removable medium —1211

Fig. 12

## INTERNATIONAL SEARCH REPORT

| International application No. |
|---|
| **PCT/CN2022/133278** |

**A. CLASSIFICATION OF SUBJECT MATTER**

H04L9/40(2022.01)i

According to International Patent Classification (IPC) or to both national classification and IPC

**B. FIELDS SEARCHED**

Minimum documentation searched (classification system followed by classification symbols)

H04L9/-

Documentation searched other than minimum documentation to the extent that such documents are included in the fields searched

Electronic data base consulted during the international search (name of data base and, where practicable, search terms used)

CNABS; CNTXT; ENTXTC; CNKI: 链接, 连接, 链路, TLS, SSL, 评估, 评价, 安全, 风险, 预警, 握手, 特征, 地址, 端口, 证书, 评分, 打分, 得分, 分数, 分值, 加权, 权重, 比重, 系数; VEN; ENTXT; USTXT; EPTXT; WOTXT: connection, TLS, SSL, evaluate, estimate, security, risk, hello, handshake, feature, address, ip, port, certificate, score, weight, coefficient

**C. DOCUMENTS CONSIDERED TO BE RELEVANT**

| Category* | Citation of document, with indication, where appropriate, of the relevant passages | Relevant to claim No. |
|---|---|---|
| PX | CN 114221799 A (THE PEOPLE'S BANK OF CHINA, DIGITAL CURRENCY INSTITUTE) 22 March 2022 (2022-03-22) claims 1-32 | 1-32 |
| X | US 2020287888 A1 (CENTRIPETAL NETWORKS, INC.) 10 September 2020 (2020-09-10) description, paragraphs [0029]-[0050] | 1-32 |
| X | CN 111953678 A (FUZHOU POLYTECHNIC) 17 November 2020 (2020-11-17) claim 1, and description, paragraphs [0027]-[0054] | 1, 24, 26-32 |
| Y | CN 111953678 A (FUZHOU POLYTECHNIC) 17 November 2020 (2020-11-17) claim 1, and description, paragraphs [0027]-[0054] | 2-23, 25 |
| Y | CN 111277578 A (XIDIAN UNIVERSITY) 12 June 2020 (2020-06-12) claims 1-6 | 2-23, 25 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **07 February 2023** | **15 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/133278**

| Patent document cited in search report | | | Publication date (day/month/year) | Patent family member(s) | | | Publication date (day/month/year) |
|---|---|---|---|---|---|---|---|
| CN | 114221799 | A | 22 March 2022 | None | | | |
| US | 2020287888 | A1 | 10 September 2020 | US | 2021266310 | A1 | 26 August 2021 |
| | | | | US | 10931661 | B2 | 23 February 2021 |
| | | | | EP | 3935804 | A1 | 12 January 2022 |
| | | | | WO | 2020180413 | A1 | 10 September 2020 |
| | | | | CN | 114175576 | A | 11 March 2022 |
| CN | 111953678 | A | 17 November 2020 | CN | 111953678 | B | 12 April 2022 |
| CN | 111277578 | A | 12 June 2020 | CN | 111277578 | B | 22 February 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111510132